# FASCICULE DE BREVET EUROPEEN

(11) **EP 3 617 094 B1**
(45) Date de publication et mention de la délivrance du brevet: **22.02.2023**
(21) Numéro de dépôt: 18306143.1
(22) Date de dépôt: 29.08.2018
(51) Int. Cl.: B65D 85/804

(54) **CAPSULE À OUVERTURE AUTOMATIQUE BIODÉGRADABLE ET ÉTANCHE À L'OXYGÈNE**
BIOLOGISCH ABBAUBARE UND SAUERSTOFFUNDURCHLÄSSIGE KAPSEL MIT AUTOMATISCHER ÖFFNUNG
BIODEGRADABLE SELF-OPENING CAPSULE IMPERVIOUS TO OXYGEN

(43) Date de publication de la demande: 04.03.2020
(73) Titulaire: Frydman, Alain, 92200 Neuilly (FR)
(72) Inventeur: Frydman, Alain, 92200 Neuilly (FR)
(74) Mandataire: Lavoix

(56) Documents cités:
- WO-A1-2014/161653
- DE-A1-102015 214 766
- US-A1- 2012 097 602

## Description

La présente invention a pour objet une capsule biodégradable et étanche à l'oxygène, typiquement à ouverture automatique.

Il existe de nombreuses capsules contenant un produit à infuser (par exemple café, thé, etc.), utilisables dans les machines d'infusion automatique, et plus particulièrement les machines à mouvement horizontal.

On connaît déjà ce type de machine à infusion qui a l'avantage d'une utilisation simple : il suffit d'insérer la capsule dans l'ouverture supérieure, et le mécanisme interne à la machine gère tous les mouvements.

Le produit à infuser étant généralement sensible à l'air, celui-ci doit être protégé dans une capsule étanche à l'oxygène qui sera ouverte juste avant l'infusion, de façon automatique pour éviter les erreurs. En outre, pour des raisons environnementales, la capsule doit être biodégradable et compostable.

Les premières capsules ont été réalisées en aluminium et fermées par un film lui aussi en aluminium. Cette solution donne une très bonne étanchéité à l'oxygène, pour protéger le produit à infuser. En revanche, la capsule n'est pas compostable ni même incinérable et pose un problème environnemental qui grossit avec le nombre croissant de capsules utilisées. Ces capsules en aluminium sont théoriquement recyclables par une filière spécialisée, mais dans la réalité elles finissent généralement leur vie dans des poubelles.

On connaît d'autres capsules dont les corps sont réalisés en des matières plastiques, dont certaines sont assez étanches à l'oxygène comme le PBT. Ces corps sont incinérables mais pas biodégradables. De plus, ces capsules sont fermées par un film aluminium qui n'est ni incinérable ni biodégradable.

Il existe également d'autres capsules dont les corps sont réalisés en une matière plastique biodégradable comme le PLA (Acide Poly Lactique) et fermés par un film en papier ou PLA. Ces capsules, voir par exemple DE102015214766 A1, sont biodégradables mais ne sont pas étanches à l'oxygène, et nécessite un sur-emballage individuel qui lui n'est pas biodégradable.

Ainsi, à ce jour, il n'existe pas de capsule dont le corps est en un matériau à la fois biodégradable, compostable et étanche à l'oxygène.

La présente invention a donc pour but de fournir une capsule avec un corps en matière plastique à la fois biodégradable et compostable.

La présente invention a également pour but de fournir une capsule avec un corps étanche à l'oxygène, et pouvant être fermé hermétiquement par un film biodégradable et étanche à l'oxygène.

La présente invention a également pour but de fournir une capsule avec un corps en un matériau d'origine bio-sourcée donc renouvelable, et pouvant être vendue dans un simple emballage en carton qui lui aussi est biodégradable, ou recyclable.

Ainsi, la présente invention concerne selon un premier aspect une capsule pour l'extraction d'une boisson, selon la revendication 1.

Le corps est donc en un matériau polymérique à la fois biodégradable, compostable, et étanche à l'oxygène. Il peut être bio-sourcé.

Quand le corps est fermé hermétiquement par un film biodégradable et étanche à l'oxygène, la capsule garantit une haute qualité de conservation pour le produit à infuser et est entièrement biodégradable.

La capsule peut également présenter la caractéristique ci-dessous, considérée individuellement ou selon toutes les combinaisons techniquement possibles :
- la capsule comprend un film biodégradable et étanche à l'oxygène fermant hermétiquement une seconde extrémité axiale de la paroi latérale, et un produit à infuser logé dans le volume interne.

Selon un second aspect, l'invention concerne un ensemble comprenant :
- une capsule ayant les caractéristiques ci-dessus ;
- une machine à infuser comprenant une partie fixe et une partie mobile par rapport à la partie fixe selon une direction de déplacement entre une position ouverte de chargement de la capsule et une position d'extraction du produit à infuser, la partie mobile ayant une cavité de réception pour le corps de la capsule présentant un bord libre engagé dans la rainure et maintenant la collerette de la capsule en appui contre la partie fixe en position d'extraction.

L'ensemble peut également présenter une ou plusieurs des caractéristiques ci-dessous, considérée individuellement ou selon toutes les combinaisons techniquement possibles :
- la surface externe de la seconde extrémité de la paroi latérale présente une forme conjuguée d'une surface interne du bord libre, et
- la nervure présente vers l'intérieur de la rainure une surface intérieure tronconique, le bord libre venant en appui sur ladite surface intérieure tronconique dans la position d'extraction.

D'autres caractéristiques et avantages dans l'invention ressortiront de la description détaillée qui en est donnée ci-dessous, à titre indicatif également limitatif, en référence aux figures annexées parmi lesquelles :
- la figure 1 est une représentation schématique simplifiée d'un ensemble conforme à l'invention, comprenant une capsule et une machine d'extraction ;
- la figure 2 est une vue de côté de la capsule de la figure 1 ;
- la figure 3 est une vue en coupe, agrandie, du fond de la capsule de la figure 2 ;
- la figure 4 est une vue agrandie de la collerette et de la seconde extrémité axiale de la paroi latérale de la capsule de la figure 2 ; et
- la figure 5 est une vue similaire à celle de la figure 4, montrant en outre le bord libre de la cavité mobile de la machine, engagé dans la rainure ménagée sur la collerette.

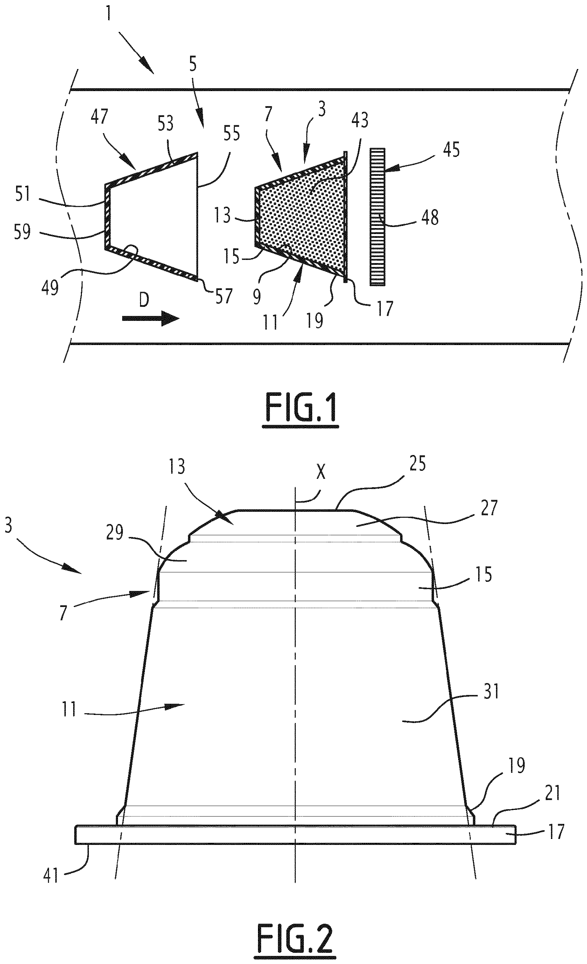

L'ensemble 1 représenté sur la figure 1 comporte une capsule 3 pour l'extraction d'une boisson et une machine à infuser 5.

La capsule 3 est prévue pour être chargée dans la machine 5, de toute manière adaptée, par exemple gravitairement.

La capsule 3 comporte un corps creux 7 délimitant un volume interne 9 de réception du produit à infuser.

Le corps creux 7 comprend une paroi latérale tubulaire 11 ayant un axe central X, et un fond 13 fermant une première extrémité axiale 15 de la paroi latérale.

Le corps 7 des capsules 3 selon l'invention est constitué d'un matériau choisi parmi les polyhydroxyalcanoates.

Les polyhydroxyalcanoates ou PHA sont des polyesters biodégradables produits naturellement par fermentation bactérienne de sucres ou lipides.

Ainsi, la capsule 3 utilise des polymères biosourcés et/ou biodégradables de la famille des PHA de manière générale.

Les PHA ont aussi des propriétés mécaniques et thermiques convenables pour être utilisés pour fabriquer des capsules utilisables dans les machines d'infusion automatique.

En outre, les PHA ont une bonne résistance à l'eau chaude et ne ramollissent pas pendant l'extraction de la boisson.

De préférence, le PHA selon l'invention répond à la formule (I) suivante : 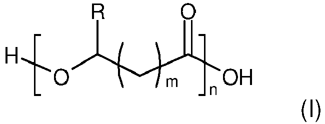 dans laquelle :
- m est un nombre entier compris entre 1 et 4 ;
- n est un nombre entier compris entre 100 et 30 000 ; et
- R est H ou un groupe alkyle comprenant de 1 à 20 atomes de carbone.

Selon un mode de réalisation, le PHA selon l'invention a un poids moléculaire compris entre 2.10⁵ et 3.10⁶ Da.

Selon un mode de réalisation, le polyhydroxyalcanoate est choisi dans le groupe constitué du poly(3-hydroxybutyrate) (P(3HB)), du poly(3-hydroxypropionate) (P(3HP)), du poly(3-hydroxyvalérate) (P(3HV)), du poly(3-hydroxyhexanoate) ou poly(3-hydroxycaproate) (P(3-HHx)) ou (P(3HC)), du poly(3-hydroxyoctoate) (P(3HO)), du poly(3-hydroxyoctadecanoate) (P(3HOD)) ou (P(3HOd)), du poly(4-hydroxybutyrate) (P(4HB)), du poly(5-hydroxyvalérate) (P(5HV)), du poly(6-hydroxyhexanoate) (P(6-HHx)), du poly(3-hydroxyhexanoate) (P(3HH)), du poly(3-hydroxynonanoate) (P(3HN)), du poly(3-hydroxyundecanoate) (P(3HUD)) ou (P(3HUd)), du poly(3-hydroxydodecanoate) (P(3HDD)) ou (P(3HDd)) et du poly(5-hydroxybutyrate) (P(5HB)).

Selon un mode de réalisation, le PHA selon l'invention est un copolymère comprenant des motifs différents de formule -O-CH(R)-(CH₂)ₘ-C(=O)- telle que définie ci-dessus, c'est-à-dire un copolymère comprenant des motifs de formule -O-CH(R)-(CH₂)ₘ-C(=O)- avec des groupes R de nature différente.

De préférence, le PHA selon l'invention est un copolymère répondant à la formule (II) suivante : 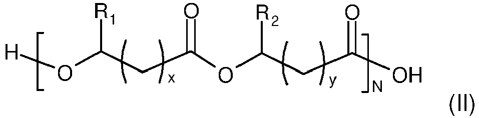 dans laquelle :
- N est un nombre entier compris entre 100 et 30 000 ;
- x et y, identiques ou différents, sont des nombres entiers compris entre 1 et 4 ;
- R₁ et R₂, identiques ou différents, de préférence différents, représentent H ou un groupe alkyle comprenant de 1 à 20 atomes de carbone.

Dans la formule (II), de préférence, les groupes R₁ et R₂ sont de nature différente et sont tels que définis ci-dessus dans la formule (I) pour R : H ou un groupe alkyle comprenant de 1 à 20 atomes de carbone.

Selon ce mode de réalisation, le PHA est choisi dans le groupe constitué du poly(3-hydroxybutyrate-co-4-hydroxybutyrate) (P(3HB-co4HB)), du poly(3-hydroxybutyrate-co-3-hydroxyvalérate) (P(3HB-co-3HV)), du poly(3-hydroxybutyrate-co-3-hydroxyhexanoate) (P(3HB-co-3HHx)), du poly(3-hydroxybutyrate-co-3-hydroxyoctoate) (P(3HB-co-3HO)), du poly(3-hydroxybutyrate-co-3-hydroxydécanoate) (P(3HB-co-3HD)), du poly(3-hydroxybutyratéco-3-hydroxyoctadécanoate) (P(3HB-co-3HOd)) et du poly(3-hydroxybutyratéco-3-hydroxyalkanoate) (P(3HB-co-3HA)).

De préférence, le PHA est un copolymère tel que défini ci-dessus et est le poly(3-hyd roxyb utyrate-*co*-3-hydroxyvalerate)(P(3HB-co-3HV)).
Selon un mode de réalisation, le matériau du corps 7 de la capsule 3 de l'invention comprend également un additif.

L'ajout d'au moins un additif permet d'améliorer encore les propriétés des polymères de la famille des PHA utilisés selon l'invention.

En particulier, l'ajout d'au moins un additif permet d'améliorer les propriétés barrières à l'oxygène pour permettre une durée de conservation plus longue. Cet ajout peut également améliorer les caractéristiques mécaniques et/ou thermiques de la matière de base, en particulier la résistance au choc, mais également d'autres caractéristiques mécaniques/thermiques.

Les additifs peuvent aussi servir d'agents nucléants et améliorer la cristallisation des polymères de la famille des PHA.

Les additifs peuvent aussi servir de charges, c'est-à-dire remplacer les polymères de la famille des PHA, sans beaucoup modifier les caractéristiques, donc sans les dégrader, et en particulier en restant biodégradables et barrière à l'oxygène.

De préférence, l'additif est choisi dans le groupe constitué du talc, du mica, des fibres de cellulose, des fibres de bois, de cellulose, notamment de la micro- ou nano-cellulose, du nitrure de bore, de l'argile, de la montmorillonite, éventuellement organo-modifiée, d'huile de soja époxydée, du citrate d'acétyl-tributyle, de polymères différents des polyhydroxyalcanoates, et de leurs mélanges.

En particulier, les polymères de la famille PHA peuvent être alliés à d'autres polymères pour améliorer certaines caractéristiques mécaniques, thermiques ou propriétés barrière à l'oxygène.

Le talc, mica ou les fibres de cellulose et bois peuvent améliorer l'effet barrière à l'oxygène et certaines propriétés mécaniques. Ils peuvent aussi servir de charges.

L'utilisation de micro- et/ou nano-cellulose (CNC) peut en outre permettre d'améliorer l'effet barrière à l'oxygène.

Parmi les additifs susmentionnés, certains comme l'huile de soja époxydée ou le citrate d'acétyl-tributyle peuvent servir de plastifiants.

La capsule 3 comprend encore une collerette externe 17, solidaire du corps 7 et entourant une seconde extrémité axiale 19 de la paroi latérale 11.

Avantageusement, la collerette 17 est constituée du même matériau que le corps 7.

Ainsi, le corps 7 et la collerette 17 sont venues en un même matériau.

Le corps 7 et la collerette 17 sont avantageusement réalisés en moulage par injection ou tout autre procédé adapté.

La collerette 17 s'étend typiquement dans un plan perpendiculaire à l'axe central X. Elle présente une surface annulaire arrière 21 tournée vers le fond 13 suivant la direction axiale, et une surface annulaire avant 23 tournée axialement à l'opposé de la surface annulaire 21.

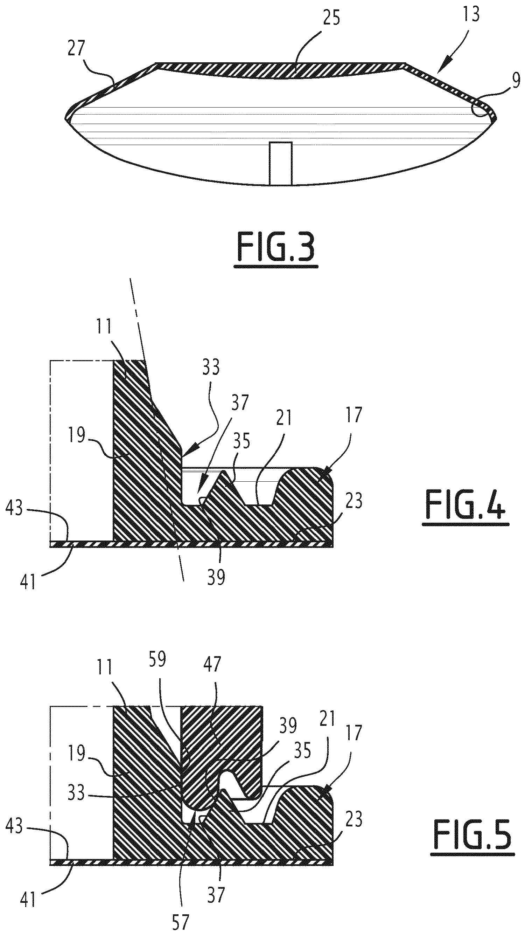

Comme visible sur la figure 3, le fond 13 présente une zone centrale 25 relativement plus épaisse, et une zone à paroi mince 27 entourant la zone centrale 25 et se raccordant directement à celle-ci.

La zone à paroi mince 27 présente une paroi relativement plus mince que la zone centrale 25. La zone à paroi mince 27 est raccordée à la première extrémité 15 de la paroi latérale 11 par une zone intermédiaire 29, de paroi d'épaisseur relativement plus importante que celle de la zone 27.

La zone à paroi mince 27 a une forme générale tronconique, d'axe centrale X. Sa section va en se rétrécissant vers la zone centrale 25.

La zone à paroi mince 27 est prévue pour se rompre sous l'effet de la pression d'eau ou pour être percée par des picots prévus dans la partie mobile de la machine. Une fois la zone mince rompue, l'eau chaude fournie par la machine peut pénétrer dans le volume interne de la capsule.

La zone à paroi mince 27 présente une épaisseur de paroi comprise entre 0,1 et 0,5mm, de préférence entre 0,1 et 0,3mm.

La forme conique de cette zone à paroi mince 27 assure la rigidité de la zone 27 vis-à-vis de l'effort appliqué par la pression de l'eau et/ou par les picots de percement de la machine.

Comme visible sur la figure 2, la paroi latérale 11 présente une portion axialement intermédiaire 31 s'inscrivant dans une surface tronconique matérialisée sur la figure 2.

La portion axialement intermédiaire 31 est tubulaire. Elle s'étend sur la plus grande partie de la hauteur axiale de la paroi latérale 11.

Comme visible sur la figure 4, la seconde extrémité 19 de la paroi latérale 11 présente une surface externe 33 faisant saillie radialement au-delà de ladite de ladite surface tronconique.

Pour ce faire, la paroi latérale 11 présente au niveau de sa seconde extrémité 19 une surépaisseur.

Comme expliqué plus bas, la surface externe 33 forme un diamètre de centrage de la capsule 3 vis-à-vis de la partie mobile de la machine.

La surface externe 33 est sensiblement cylindrique, et s'étend sur toute la périphérie de la capsule. Elle est en coaxiales à l'axe X. Elle se raccorde à la surface annulaire arrière 21 de la collerette 17.

Pour garantir l'étanchéité de la capsule vis-à-vis de la machine, la collerette 17 porte sur la surface annulaire arrière 21 une nervure 35.

La nervure 35 est à contour fermé. Elle est typiquement circulaire.

La nervure 35 définit, avec la surface externe 33, une rainure 37.

La rainure 37 est à contour fermé, et typiquement est circulaire. Elle s'étend sur toute la périphérie de la collerette. Elle est ouverte axialement vers le fond 13.

La rainure 37 présente une largeur, prise radialement par rapport à l'axe central X, qui diminue vers la surface annulaire arrière 21.

Pour ce faire, la nervure 35 présente vers l'intérieur de la rainure 37 une surface intérieure tronconique 39.

L'angle d'ouverture de la surface intérieure tronconique 39 est compris entre 15° et 45°, de préférence compris entre 20° et 30°.

De préférence, la capsule 3 comprend un film 41 biodégradable et étanche à l'oxygène, fermant hermétiquement la seconde extrémité axiale 19 de la paroi tubulaire 11.

Le produit à infuser 43 est logé dans le volume interne 9.

Le produit à infuser est typiquement du café en poudre. En variante, ce produit est du thé ou tout autre produit adapté.

Le volume interne 9 est donc hermétique, notamment vis-à-vis de l'oxygène, ce qui permet une bonne conservation du produit à infuser 43.

Le film 41 doit remplir plusieurs fonctions :
- être biodégradable au moins autant que le corps 7 ;
- être suffisamment barrière à l'oxygène pour ne pas dégrader cette propriété de la capsule ;
- être soudable de façon étanche et solide sur la capsule, la soudure devant résister notamment à l'eau chaude pendant l'extraction ;
- être percuté ou déchiré convenablement dans la machine à infusion, par la pression du mélange d'eau et du produit à infuser mouillé, au début du processus d'extraction.

Typiquement, le film 41 est fixé sur la surface annulaire avant 23 de la collerette 17, par tous moyens adaptés, comme illustré sur la figure 4.

Typiquement, le film 41 est un film vendu par la société Ahlstrom-Munksjö sous le nom « Green capsule top lead O₂ barrier » ou est un film du même type développé par la société Amcor.

Ces films permettent d'assurer les fonctions énumérées ci-dessus de manière satisfaisante.

Selon une variante non représentée, une couche barrière à l'oxygène est ajoutée sur le film 41 de manière à renforcer ses propriétés d'étanchéité à l'oxygène.

Avantageusement, le film 41 est associé à une couche 43 de fibres non tissées, représentée sur les figures 4 et 5.

Cette couche 43 est par exemple en PLA, de telle sorte qu'elle est biodégradable.

La couche 43 sert de filtre et retient le produit à infuser pendant et après l'extraction, quand le film 41 est déchiré.

La couche de fibres non tissées 43 couvre typiquement toute la surface du film 41.

Elle s'étend vers l'intérieur de la capsule 3 par rapport au film 41.

Comme visible sur la figure 1, la machine 5 comporte une partie fixe 45 et une partie 47 mobile par rapport à la partie fixe 45. La partie mobile 47 se déplace par rapport à la partie fixe 45 entre une position ouverte permettant le chargement de la capsule 3 dans la machine 5, et une position d'extraction de la capsule 3.

La partie mobile 47 se déplace entre sa position ouverte et sa position d'extraction selon une direction de déplacement D représenté sur la figure 1.

Sur la figure 1, la partie mobile 47 est représentée en position ouverte.

La partie fixe 45 comporte, entre autre, une grille 48, prévue pour laisser passer la boisson préparée par extraction de la capsule 3. Après passage à travers la grille 48, la boisson d'écoule dans un récipient placé par l'utilisateur sous la machine. Le canal de circulation de la boisson en aval de la grille 48 n'est pas représenté.

La partie mobile 47, comme visible sur la figure 1, délimite intérieurement une cavité de réception 49 pour le corps 7 de la capsule. La cavité 49 est délimitée par un fond borgne 51, une paroi latérale 53 et une ouverture 55 à l'opposé du fond 51.

La partie mobile 47 présente notamment un bord libre 57 qui vient maintenir la collerette 17 de la capsule 3 en appui contre la partie fixe 45 dans la position d'extraction.

Le bord libre 57 délimite l'ouverture 55.

Le fond 51 présente un orifice 59 d'arrivée de fluide, débouchant dans la cavité 49.

La machine comporte par ailleurs des moyens non représentés pour alimenter la cavité 49 en un fluide tel que de la vapeur d'eau ou de l'eau surchauffée, à travers l'orifice 59.

La cavité 49 présente une forme générale sensiblement conjuguée de la forme générale du corps 7 de la capsule.

Dans la position ouverte de la partie mobile, la capsule 3 peut être chargée dans la machine 5, typiquement gravitairement. Dans cette position ouverte, la partie mobile 47 est écartée de la grille 48 selon la direction de déplacement.

Dans la position d'extraction, les parties fixes et mobiles 45, 47 maintiennent la capsule 7 dans une position dans laquelle une boisson est susceptible d'être préparée par extraction de la capsule. La partie mobile 47 est décalée vers la grille 48. Le corps 7 de la capsule est engagé dans la cavité 49. La collerette 17 est pincée entre le bord libre 57 et la partie fixe 45.

Dans cette position, comme illustré sur la figure 5, le bord libre 57 est engagé dans la rainure 37.

Comme visible sur la figure 5, la surface externe 33 de la seconde extrémité 19 de la paroi latérale 11 présente une forme conjuguée de la surface interne 61 du bord libre 57. Ainsi, la surface externe 33 est ajustée pour permettre le centrage de la capsule 3 au contact de la cavité 49.

Toutefois, il est connu que de nombreuses machines d'infusion présentent de petits reliefs sur la surface interne 61 du bord libre 57, qui empêchent une étanchéité convenable.

Pour pallier cet inconvénient, le bord libre 57 dans la position d'extraction vient au contact de la surface intérieure conique 39, prévue sur la collerette 17. Cette situation est illustrée sur la figure 5.

Comme visible sur cette figure, c'est une surface du bord libre 57 située vers l'extérieur de la cavité 49 qui vient en contact de la surface intérieure conique 39. Cette surface est lisse, ce qui permet une étanchéité par contact de très bonne qualité.

Un tel agencement est particulièrement avantageux du fait que la matière constituant le corps 7 et la collerette 17 de la capsule 3 est particulièrement rigide. Il n'est pas possible de compter sur l'élasticité du matériau du corps 7 ou de la collerette 17 pour réaliser l'étanchéité en position d'extraction.

Ainsi, le bord libre 57 de la cavité 49 est emprisonné entre la surface externe 33 et la nervure 35, l'effort de fermeture de la cafetière appliquant ainsi fermement le bord libre 57 de la cavité 49 sur la matière de la capsule.

Notamment, l'angle d'ouverture de la surface intérieure conique 39 est choisi de manière à assurer une pression de contact optimum et une bonne tolérance de fonctionnement malgré les dispersions de fabrication et la dilatation de la capsule 3 provoquée par le passage de l'eau chaude.

Ainsi, le corps de la capsule de l'invention est réalisé dans une matière plastique qui est à la fois biodégradable, compostable, et étanche à l'oxygène.

La capsule est fermée hermétiquement par un film biodégradable et étanche à l'oxygène, permettant une excellente conservation du produit contenu dans cette capsule.

De plus, la matière constituant le corps de la capsule est d'origine bio-sourcée et donc renouvelable.

La capsule peut donc être vendue dans un simple emballage en carton, qui est lui aussi biodégradable ou recyclable.

En dépit de la rigidité de la matière constituant le corps et la collerette de la capsule, il est possible d'obtenir une excellente étanchéité quand la capsule est chargée dans la position d'extraction de la machine.

En variante, la collerette 17 n'est pas constituée du même matériau que le corps 7 de la capsule. Dans ce cas, la collerette 17 est avantageusement constituée d'un matériau suffisamment souple pour assurer l'étanchéité vis-à-vis de l'eau chaude une fois la capsule 3 en position d'extraction de la machine 5.

## Revendications

1. Capsule (3) pour l'extraction d'une boisson, comprenant un corps creux (7) délimitant un volume interne (9) de réception d'un produit à infuser tel que du café, le corps creux (7) comprenant une paroi latérale (11) tubulaire ayant un axe central (X) et un fond (13) fermant une première extrémité axiale (15) de la paroi latérale (11),
ledit corps (7) étant constitué d'un matériau choisi parmi les polyhydroxyalcanoates,
la capsule (3) comprenant une collerette (17) externe solidaire du corps (7) et entourant une seconde extrémité axiale (19) de la paroi latérale (11), la collerette (17) étant constituée du même matériau que le corps (7),
**caractérisée en ce que** la paroi latérale (11) présente une portion axialement intermédiaire (31) s'inscrivant dans une surface tronconique, la seconde extrémité (19) de la paroi latérale (11) présentant une surface externe (33) faisant saillie radialement au-delà de ladite forme tronconique,
la collerette (17) portant sur une surface annulaire arrière (21) tournée axialement vers le fond (13) une nervure (35), définissant avec la surface externe (33) de la seconde extrémité (19) une rainure (37) de largeur radiale diminuant vers la surface annulaire arrière (21).

2. Capsule selon la revendication 1, dans laquelle le polyhydroxyalcanoate répond à la formule (I) suivante : 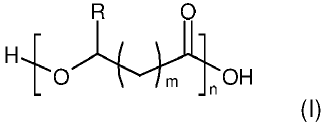 dans laquelle :
- m est un nombre entier compris entre 1 et 4 ;
- n est un nombre entier compris entre 100 et 30 000 ; et
- R est H ou un groupe alkyle comprenant de 1 à 20 atomes de carbone.

3. Capsule selon la revendication 1 ou 2, dans laquelle le polyhydroxyalcanoate est choisi dans le groupe constitué du poly(3-hydroxybutyrate), du poly(3-hydroxypropionate), du poly(3-hydroxyvalérate), du poly(3-hydroxyhexanoate) ou poly(3-hydroxycaproate), du poly(3-hydroxyoctoate), du poly(3-hydroxyoctadecanoate), du poly(4-hydroxybutyrate), du poly(5-hydroxyvalérate), du poly(6-hydroxyhexanoate), du poly(3-hydroxyhexanoate), du poly(3-hydroxynonanoate), du poly(3-hydroxyundecanoate), du poly(3-hydroxydodecanoate) et du poly(5-hydroxybutyrate).

4. Capsule selon la revendication 1, dans laquelle le polyhydroxyalcanoate est un copolymère répondant à la formule (II) suivante : 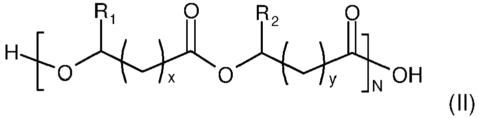 dans laquelle :
- N est un nombre entier compris entre 100 et 30 000 ;
- x et y, identiques ou différents, sont des nombres entiers compris entre 1 et 4 ;
- R₁ et R₂, identiques ou différents, de préférence différents, représentent H ou un groupe alkyle comprenant de 1 à 20 atomes de carbone.

5. Capsule selon la revendication 4, dans laquelle le polyhydroxyalcanoate est choisi dans le groupe constitué du poly(3-hydroxybutyrate-co-4-hydroxybutyrate), du poly(3-hydroxybutyrate-co-3-hydroxyvalérate), du poly(3-hydroxybutyrate-co-3-hydroxyhexanoate) du poly(3-hydroxybutyrate-co-3-hydroxyoctoate), du poly(3-hydroxybutyrate-co-3-hydroxydécanoate), du poly(3-hydroxybutyratéco-3-hydroxyoctadécanoate) et du poly(3-hydroxybutyratéco-3-hydroxyalkanoate).

6. Capsule selon la revendication 4 ou 5, dans laquelle le polyhydroxyalcanoate est le poly(3-hydroxybutyrate-co-3-hydroxyvalérate).

7. Capsule selon l'une quelconque des revendications 1 à 6, dans laquelle le matériau comprend au moins un additif

8. Capsule selon la revendication 7, dans lequel l'additif est choisi dans le groupe constitué du talc, du mica, des fibres de cellulose, des fibres de bois, de cellulose, notamment de la micro- ou nano-cellulose, du nitrure de bore, de l'argile, de la montmorillonite, éventuellement organo-modifiée, d'huile de soja époxydée, du citrate d'acétyl-tributyle, de polymères différents des polyhydroxyalcanoates, et de leurs mélanges.

9. Capsule selon l'une quelconque des revendications 1 à 8, dans laquelle la capsule (3) comprend un film (41) biodégradable et étanche à l'oxygène fermant hermétiquement une seconde extrémité axiale (19) de la paroi latérale (11), et un produit (43) à infuser logé dans le volume interne (9).

10. Ensemble (1) comprenant :
- une capsule (3) selon l'une quelconque des revendications 1 à 9 ;
- une machine à infuser (5) comprenant une partie fixe (45) et une partie (47) mobile par rapport à la partie fixe (45) entre une position ouverte de chargement de la capsule (3) et une position d'extraction de la capsule (3), la partie mobile (47) ayant une cavité (49) de réception du corps (7) de la capsule (3) présentant un bord libre (57) engagé dans la rainure (37) et maintenant la collerette (17) de la capsule (3) en appui contre la partie fixe (47) en position d'extraction.

11. Ensemble selon la revendication 10, dans lequel la surface externe (33) de la seconde extrémité (19) de la paroi latérale (11) présente une forme conjuguée d'une surface interne (61) du bord libre (57).

12. Ensemble selon la revendication 10 ou 11, dans lequel la nervure (35) présente vers l'intérieur de la rainure (37) une surface intérieure tronconique (39), le bord libre (57) venant en appui sur ladite surface intérieure tronconique (39) dans la position d'extraction.

## Patentansprüche

1. Kapsel (3) zum Extrahieren eines Getränks, umfassend einen hohlen Körper (7), der ein Innenvolumen (9) zur Aufnahme eines Aufgussprodukts, wie beispielsweise Kaffee begrenzt, der hohle Körper (7) umfassend eine rohrförmige Seitenwand (11), die eine Mittelachse (X) und einen Boden (13), der ein erstes axiales Ende (15) der Seitenwand (11) verschließt, aufweist,
wobei der Körper (7) aus einem Material besteht, das ausgewählt ist aus Polyhydroxyalkanoaten, die Kapsel (3) umfassend einen äußeren Bund (17), der fest mit dem Körper (7) verbunden ist und
ein zweites axiales Ende (19) der Seitenwand (11) umgibt, wobei der Bund (17) aus demselben Material wie der Körper (7) besteht,
**dadurch gekennzeichnet, dass** die Seitenwand (11) einen axialen Zwischenabschnitt (31) aufweist, der in eine kegelstumpfförmige Fläche eingeschrieben ist, wobei das zweite Ende (19) der Seitenwand (11) eine Außenfläche (33) aufweist, die radial über
die kegelstumpfförmige Form hervorsteht,
der Bund (17) auf einer hinteren ringförmigen Fläche (21), die axial dem Boden (13) zugewandt ist, eine Rippe (35) trägt, die mit der Außenfläche (33) des zweiten Endes (19) eine Nut (37) mit einer radialen Breite definiert, die zu der hinteren ringförmigen Fläche (21) hin abnimmt.

2. Kapsel nach Anspruch 1, wobei das Polyhydroxyalkanoat der folgenden Formel (I) entspricht: 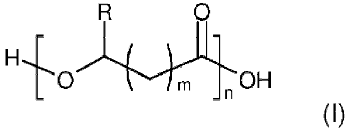 wobei:
- m eine ganze Zahl zwischen 1 und 4 ist;
- n eine ganze Zahl zwischen 100 und 30.000 ist; und
- R H oder eine Alkylgruppe umfassend 1 bis 20 Kohlenstoffatome ist.

3. Kapsel nach Anspruch 1 oder 2, wobei das Polyhydroxyalkanoat ausgewählt ist aus der Gruppe, bestehend aus Poly(3-hydroxybutyrat), Poly(3-hydroxypropionat), Poly(3-hydroxyvalerat), Poly(3-hydroxyhexanoat) oder Poly(3-hydroxycaproat), Poly(3-hydroxyoctoat), Poly(3-hydroxyoctadecanoat), Poly(4-hydroxybutyrat), Poly(5-hydroxyvalerat), Poly(6-hydroxyhexanoat), Poly(3-hydroxyhexanoat), Poly(3-hydroxynonanoat), Poly(3-hydroxyundecanoat), Poly(3-hydroxydodecanoat) und Poly(5-hydroxybutyrat).

4. Kapsel nach Anspruch 1, wobei das Polyhydroxyalkanoat ein Copolymer ist, das der folgenden Formel (II) entspricht: 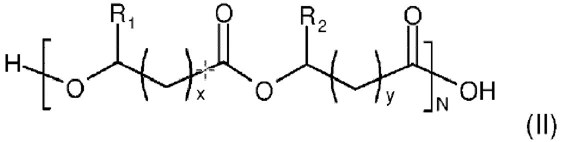 wobei:
- N eine ganze Zahl zwischen 100 und 30.000 ist;
- x und y, die gleich oder verschieden sind, ganze Zahlen zwischen 1 und 4 sind;
- R₁ und R₂, die gleich oder verschieden, vorzugsweise verschieden sind, H oder eine Alkylgruppe umfassend 1 bis 20 Kohlenstoffatome darstellen.

5. Kapsel nach Anspruch 4, wobei das Polyhydroxyalkanoat ausgewählt ist aus der Gruppe, bestehend aus Poly(3-hydroxybutyrat-co-4-hydroxybutyrat), Poly(3-hydroxybutyrat-co-3-hydroxyvalerat), Poly(3-hydroxybutyrate-co-3-hydroxyhexanoat), Poly(3-Hydroxybutyrat-co-3-hydroxyoctoat), Poly(3-hydroxybutyrat-co-3-hydroxydecanoat), Poly(3-Hydroxybutyrat-co-3-hydroxydecanoat) und Poly(3-hydroxybutyrat-co-3-hydroxyalkanoat).

6. Kapsel nach Anspruch 4 oder 5, wobei das Polyhydroxyalkanoat Poly(3-hydroxybutyrat-co-3-hydroxyvalerat) ist.

7. Kapsel nach einem der Ansprüche 1 bis 6, wobei das Material mindestens ein Additiv umfasst.

8. Kapsel nach Anspruch 7, wobei das Additiv ausgewählt ist aus der Gruppe, bestehend aus Talkum, Glimmer, Zellulosefasern, Holzfasern, Zellulose, insbesondere Mikro- oder Nano-Zellulose, Bornitrid, Ton, Montmorillonit, gegebenenfalls organo-modifiziert, epoxidiertem Sojaöl,Acetyltributylacetat, Polymeren, die von Polyhydroxyalkanoaten verschieden sind, und deren Gemischen.

9. Kapsel nach einem der Ansprüche 1 bis 8, wobei die Kapsel (3) einen sauerstoffdichten, biologisch abbaubaren Film (41) umfasst, der ein zweites axiales Ende (19) der Seitenwand (11) dicht verschließt, und ein Infusionsprodukt (43), das in dem Innenvolumen (9) aufgenommen ist.

10. Anordnung (1), umfassend:
- eine Kapsel (3) nach einem der Ansprüche 1 bis 9;
- eine Aufgussmaschine (5), umfassend einen festen Abschnitt (45) und einen Abschnitt (47), der in Bezug auf den festen Abschnitt (45) zwischen einer offenen Position zum Laden der Kapsel (3) und einer Position zum Herausnehmen der Kapsel (3) beweglich ist, wobei der bewegliche Abschnitt (47) einen Hohlraum (49) zur Aufnahme des Körpers (7) der Kapsel (3) aufweist, der einen freien Rand (57) aufweist, der in die Nut (37) eingreift und den Bund (17) der Kapsel (3) in Anlage an den festen Abschnitt (47) in der Entnahmeposition hält.

11. Anordnung nach Anspruch 10, wobei die Außenfläche (33) des zweiten Endes (19) der Seitenwand (11) eine konjugierte Form einer Innenfläche (61) des freien Rands (57) aufweist.

12. Anordnung nach Anspruch 10 oder 11, wobei die Rippe (35) zur Innenseite der Nut (37) hin eine kegelstumpfförmige Innenfläche (39) aufweist, wobei der freie Rand (57) in der Entnahmeposition an der kegelstumpfförmigen Innenfläche (39) anliegt.

## Claims

1. Capsule (3) for extracting a beverage, comprising a hollow body (7) delimiting an internal volume (9) for receiving a product to be brewed such as coffee, the hollow body (7) comprising a tubular side wall (11) having a central axis (X) and a bottom (13) closing a first axial end (15) of the side wall (11),
said body (7) being made of a material selected from polyhydroxyalkanoates, the capsule (3) comprising an external collar (17) integral with the body (7) and surrounding a second axial end (19) of the side wall (11), the collar (17) being of the same material as the body (7), **characterised in that** the side wall (11) has an axially intermediate portion (31) inscribed in a frusto-conical surface, the second end (19) of the side wall (11) having an outer surface (33) projecting radially beyond the said truncated cone shape,
the collar (17) carrying on a rear annular surface (21) facing axially towards the bottom (13) a rib (35), defining with the outer surface (33) of the second end (19) a groove (37) of radial width decreasing towards the rear annular surface (21).

2. The capsule of claim 1, in which the polyhydroxyalkanoate is the following formula (I): 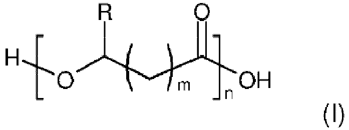 in which:
- m is an integer between 1 and 4;
- m is an integer between 100 and 30,000; and
- R is H or an alkyl group comprising 1 to 20 carbon atoms.

3. The capsule of claim 1 or 2, in which the polyhydroxyalkanoate is selected from the group consisting of poly(3-hydroxybutyrate), poly(3-hydroxypropionate) poly(3-hydroxyvalerate), poly(3-hydroxyhexanoate) or poly(3-hydroxycaproate), poly(3-hydroxyoctoate), poly(3-hydroxyoctadecanoate), poly(4-hydroxybutyrate), poly(5-hydroxyvalerate), poly(3-hydroxynonanoate), poly(3-hydroxyundecanoate), poly(3-hydroxydodecanoate) and poly(5-hydroxybutyrate).

4. The capsule of claim 1 in which the polyhydroxyalkanoate is a copolymer having the following formula (II) 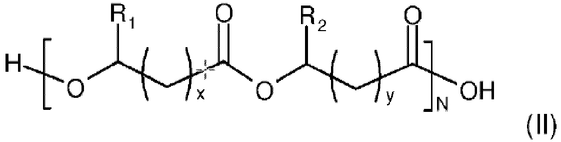 in which:
- N is an integer between 100 and 30 000;
- x and y, identical or different, are integers between 1 and 4;
- R1 and R2, identical or different, preferably different, represent H or an alkyl group comprising from 1 to 20 carbon atoms.

5. The capsule of claim 4, in which the polyhydroxyalkanoate is selected from from the group consisting of poly(3-hydroxybutyrate-co-4-hydroxybutyrate), poly(3-hydroxybutyrate-co-3-hydroxyvalerate), poly(3-hydroxybutyrate-co-3-hydroxyhexanoate), poly(3-hydroxybutyrate-co-3-hydroxyoctoate), poly(3-hydroxybutyrate-co-3-hydroxydecanoate), poly(3-hydroxybutyrateco-3-hydroxyoctadecanoate) and poly(3-hydroxybutyrateco-3-hydroxyalkanoate).

6. The capsule of claim 4 or 5, in which the polyhydroxyalkanoate is poly(3-hydroxybutyrate-co-3-hydroxyvalerate).

7. A capsule according to any one of claims 1 to 6, in which the material comprises at least one additive.

8. The capsule of claim 7, in which the additive is selected from the group consisting of talc, mica, cellulose fibres, wood fibres, cellulose, in particular micro- or nano-cellulose, boron nitride, clay, montmorillonite, possibly organo-modified, epoxidised soya oil, citrate acetyl-tributyl, polymers other than polyhydroxyalkanoates, and mixtures.

9. A capsule according to any one of claims 1 to 8, in which the capsule (3) comprises a biodegradable, oxygen-tight film (41) hermetically sealing a second axial end (19) of the side wall (11), and an infusion product (43) housed in the internal volume (9).

10. An assembly (1) comprising:
- a capsule (3) according to any of claims 1 to 9;
- an infusion machine (5) comprising a fixed part (45) and a part (47) that can move with respect to the fixed part (45) between an open position for loading the capsule (3) and a position for extracting the capsule (3), the movable part (47) having a cavity (49) for receiving the body (7) of the capsule (3), which has a free edge (57) that is engaged in the cavity (49), and the movable part (47) having an open position for loading the capsule (3) groove (37) and holding the flange (17) of the cap (3) against the fixed part (47) in the extraction position (47) in the extraction position.

11. The assembly according to claim 10, in which the outer surface (33) of the second end (19) of the side wall (11) has a mating shape of an end (19) of the side wall (11) has a shape consisting of an inner surface (61) of the free edge (57).

12. An assembly according to claim 10 or 11, in which the rib (35) has towards the interior of the groove (37) a frusto-conical inner surface (39), the free edge (57) abutting said frusto-conical inner surface (39) in the extraction position.
